# EUROPEAN PATENT APPLICATION

(11) **EP 0 756 251 A2**
(43) Date of publication of application: **29.01.1997**
(21) Application number: 96112120.9
(22) Date of filing: 26.07.1996
(51) Int. Cl.: G07F 1/00, H04N 1/00

(54) **Video photography system**

(30) Priority: 26.07.1995 JP 190717/95; 18.08.1995 JP 210750/95; 06.11.1995 JP 287522/95; 22.11.1995 JP 304777/95
(71) Applicant: SONY CORPORATION, Tokyo (JP)
(72) Inventor: Yoshimatsu, Morio, Shinagawa-ku, Tokyo (JP); Nakagawa, Yutaka, Shinagawa-ku, Tokyo (JP); Akiba, Toshiya, Shinagawa-ku, Tokyo (JP); Hasegawa, Katsuhisa, Shinagawa-ku, Tokyo (JP)
(74) Representative: Melzer, Wolfgang, Dipl.-Ing.

(57) **Abstract**

A coin-activated video photography system includes a video camera (1) for capturing an image, a video monitor (2) for displaying the image captured by the video camera, a video printer (3) for producing a photoprint (8) representing the image captured by the video camera, a coin counter (5) for receiving an inserted coin, a printer (6) for printing a receipt for the coin received by the coin counter (5), and a controller (7) for operating the video camera (1), the video monitor, and the video printer to display an image and produce a photoprint (8) of the image in response to insertion of a coin into the coin counter (5), and printing a receipt with the printer (6) for the coin inserted into the coin counter (5).

## Description

### BACKGROUND OF THE INVENTION

### Field of the Invention:

The present invention relates to a video photography system for producing photoprints based on video images captured by a video camera, and more particularly to a coin-activated video photography system which may be installed on the street for a plurality of users to take portrait pictures by themselves in exchange for payment by coins.

### Description of the Related Art:

Conventional coin-activated camera systems that are installed on the street produce photoprints of exposed images using an instant photographic material, for example.

However, photoprints produced by the conventional coin-activated camera systems cannot be corrected or easily modified.

For determining the size of the image of a subject (typically, the user), for example, it is necessary to make some adjustments in advance, e.g., by varying the distance between the subject and the camera or changing lenses of the camera. If the user does not satisfy a photoprint produced by the camera system, then the user has to take a picture again to produce another photoprint, which results in an additional expenditure of time and money.

When the user wants four photoprints, the conventional camera system produces four exposures to make those four photoprints. The four photoprints thus produced cannot be exactly identical to each other, and may not suitable for use as certificate photoprints or the like which need to be exactly identical to each other.

The conventional camera system usually does not have a device for automatically issuing receipts for the amounts of money which users have paid for photoprints. Therefore, the conventional camera system needs to be attended by a person who manually issues receipts. In the absence of such a person, the conventional camera system cannot be used in applications where photoprints produced by the camera system are used for business purposes and hence the amounts of money paid for them are reimbursable as expenses.

Furthermore, if the background of a subject to be photographed has a color or density irregularity or a stain, then such a color or density irregularity or a stain has been included in a picture of the subject which is taken by the conventional coin-activated camera system. If the color of the background of a subject is to be changed, then it has heretofore been necessary to place a curtain in front of the background or replace the background panel with another background panel.

There have been proposed a video photography system for consumer use which captures the image of a subject with a video camera, supplies a video signal from the video camera to a video printer, and produces a photoprint bearing the captured image from the video printer. In the video photography system, one frame or field of the video signal is extracted and stored in a memory, and a photoprint is generated based on the stored video signal. Therefore, the user can produce a desired photoprint after confirming a video image which is displayed on a video monitor based on the stored video signal that is supplied to the video monitor.

However, for producing photoprints from one frame or field of a video signal stored in the memory, the user has to make various settings, e.g., for a photoprint size and a number of photoprints to be produced. It is time-consuming for the user to make such settings, and a device for entering such settings is of a complex structure having a number of operating buttons, etc.

If the video photography system for consumer use is used on the street for a plurality of users to produce portrait photoprints in exchange for payment, then the operation which each user carries out on the video photography system is complex, excessively burdensome, and time-consuming. As a consequence, the efficiency of the video photography system used in such an environment is low.

One video photography system capable of easily producing photoprints based on video signals is disclosed in Japanese patent application No. 7-190717.

The disclosed video photography system has a video camera fixedly mounted on a main system housing. Therefore, images represented by video signals generated by the video camera include a fixed background which is too monotonous and boring for users to be positively willing to use the video photography system on a repetitive basis. While it has been proposed to introduce some illustrated backgrounds into photoprints, the proposal has proven unsatisfactory.

Another video photography system which has been proposed creates photoprints including scenes that are reproduced from exposed photographic films or recorded video tapes. The proposed video photography system is of a highly complicated structure because it needs a copying device for copying those exposed photographic films to produce video signals or a video tape recorder for playing back the recorded video tapes.

The conventional video photography system allows a video image to be corrected through an electric process before a photoprint is generated based on the video image. Specifically, if the background of a subject which is imaged by the video camera is to be changed, then the background image may be replaced with a different background image using a technique known as so-called chroma keying. However, the chroma keying function makes the video photography system complex and expensive because it requires the video photography system to have a frame memory for synchronizing the time bases of signals.

### SUMMARY OF THE INVENTION

It is therefore an object of the present invention to provide a video photography system which is capable of producing a desired photoprint after a corresponding video image has been confirmed, simultaneously generating a plurality of photoprints of one picture, and automatically issuing a receipt for the amount to money paid for a photoprint or photoprints.

Another object of the present invention is to provide a video photography system which requires the user to make relatively simple settings for producing photoprints and has a relatively simple device for entering settings.

Still another object of the present invention is to provide a video photography system which is capable of introducing external video signals to produce photoprints that are attractive enough for users to intend to use the video photography system on a repetitive basis.

Yet still another object of the present invention is to provide a video photography system which allows a background image of a video signal to be easily and inexpensively changed in color to produce a desired photoprint based on the changed video signal.

According to the present invention, there is provided a coin-activated video photography system comprising a video camera for capturing an image, a video monitor for displaying the image captured by the video camera, a video printer for producing a photoprint representing the image captured by the video camera, a coin counter for receiving an inserted coin, a printer for printing a receipt for the coin received by the coin counter, and a controller for operating the video camera, the video monitor, and the video printer to display an image and produce a photoprint of the image in response to insertion of a coin into the coin counter, and printing a receipt with the printer for the coin inserted into the coin counter.

According to the present invention, there is also provided a coin-activated video photography system comprising a video camera for capturing an image, a video monitor for displaying the image captured by the video camera, a video printer for producing a photoprint representing the image captured by the video camera, a coin counter for receiving an inserted coin, an illumination device for emitting illuminating light, and a controller for operating the video camera, the video monitor, and the video printer to display an image and produce a photoprint of the image in response to insertion of a coin into the coin counter and depression of an exposure button, printing a receipt with the printer for the coin inserted into the coin counter, and thereafter controlling the video printer to produce a plurality of photoprints in response to depression of a combination of the exposure button and another operation button.

According to the present invention, there is further provided a coin-activated video photography system comprising a video camera for capturing an image, a video monitor for displaying the image captured by the video camera, a video printer for producing a photoprint representing the image captured by the video camera, a coin counter for receiving an inserted coin, a controller for operating the video camera, the video monitor, and the video printer to display an image and produce a photoprint of the image in response to insertion of a coin into the coin counter, and a video input terminal for supplying a video signal, instead of a video signal from the video camera, to the video monitor and the video printer.

According to the present invention, there is also provided a video photography system comprising a video camera for capturing an image, a video monitor for displaying the image captured by the video camera, a video printer for producing a photoprint representing a filed of image represented by a video signal produced by the video camera, extracting means for extracting a background area of the video signal, and color-changing means for changing a color of the extracted background area.

### BRIEF DESCRIPTION OF THE DRAWINGS

FIG. 1 is a perspective view of a video photography system according to a first embodiment of the present invention;
FIG. 2 is a block diagram of the video photography system shown in FIG. 1;
FIGS. 3A and 3B are flowcharts of an operation sequence of the video photography system shown in FIG. 1;
FIGS. 4A through 4D are views showing photoprints produced by the video photography system shown in FIG. 1;
FIG. 5 is a view showing photoprints produced by the video photography system shown in FIG. 1;
FIG. 6 is a front elevational view of a video photography system according to a second embodiment of the present invention;
FIG. 7 is a block diagram of the video photography system shown in FIG. 6;
FIGS. 8A, 8B, and 8C are flowcharts of an operation sequence of the video photography system shown in FIG. 6;
FIG. 9 is a front elevational view of a video photography system according to a third embodiment of the present invention;
FIG. 10 is a block diagram of the video photography system shown in FIG. 9;
FIG. 11 is a block diagram of a video photography system according to a fourth embodiment of the present invention;
FIG. 12 is a schematic side elevational view, partly in block form, of the a coin-activated video photography system which incorporates the video photography system shown in FIG. 11;
FIG. 13 is a front elevational view of a control key console of the video photography system shown in FIG. 11; and
FIG. 14 is a view showing a photoprint produced by the video photography system shown in FIG. 11.

### DETAILED DESCRIPTION OF THE PREFERRED EMBODIMENTS

Like or corresponding parts are denoted by like of corresponding reference characters throughout views.

Video photography systems according to various embodiments of the present invention are preferably used as coin-activated video photography systems which may be installed on the street for a plurality of users to take portrait pictures by themselves in exchange for payment by coins.

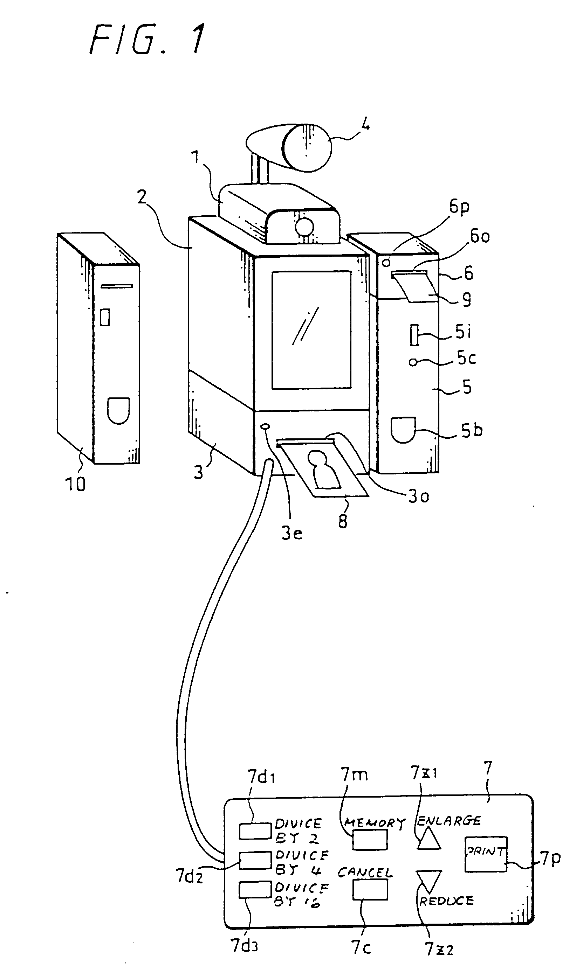

As shown in FIG. 1, a video photography system according to a first embodiment of the present invention has a vertical stack of a video camera 1, a video monitor 2, a video printer 3. The video camera 1 and the video monitor 2 are placed on their sides for capturing and displaying, respectively, portrait images which are typically used on certificates such as driver's licenses or passports. An illumination lamp 4 is supported above the video camera 1 for emitting illuminating light forwardly of the video camera 1. The video photography system also includes a coin counter 5 positioned laterally of the video monitor 2 and the video printer 3. A printer 6 which comprises a thermal transfer printer, for example, is mounted on an upper end of the coin counter 5.

A remote commander 7 is connected to the video printer 3 by a cable for controlling the video camera 1 and the video printer 3. The remote commander 7 has a plurality of operation buttons including a memory button 7m, a cancel button 7c, a pair of zoom buttons 7z₁, 7z₂ for enlarging and reducing images, a print button 7p, and three division buttons 7d₁, 7d₂, 7d₃ for dividing images by 2, 4, 16, respectively.

The video printer 3 has an LED (light-emitting diode) 3e mounted on its front panel and an outlet slot 30 defined in the front panel for ejecting a produced photoprint 8.

The coin counter 5 has a coin insertion slot 5i defined in its front panel, a return button 5c mounted on the front panel, and a coin return slot 5b defined in the front panel.

The printer 6 has a print request button 6p mounted on its front panel and an outlet slot 6o defined in the front panel for ejecting a printed receipt 9.

The video photography system is also associated with a money exchange machine 10. The money exchange machine 10 is useful especially when the video photography system is used on the street.

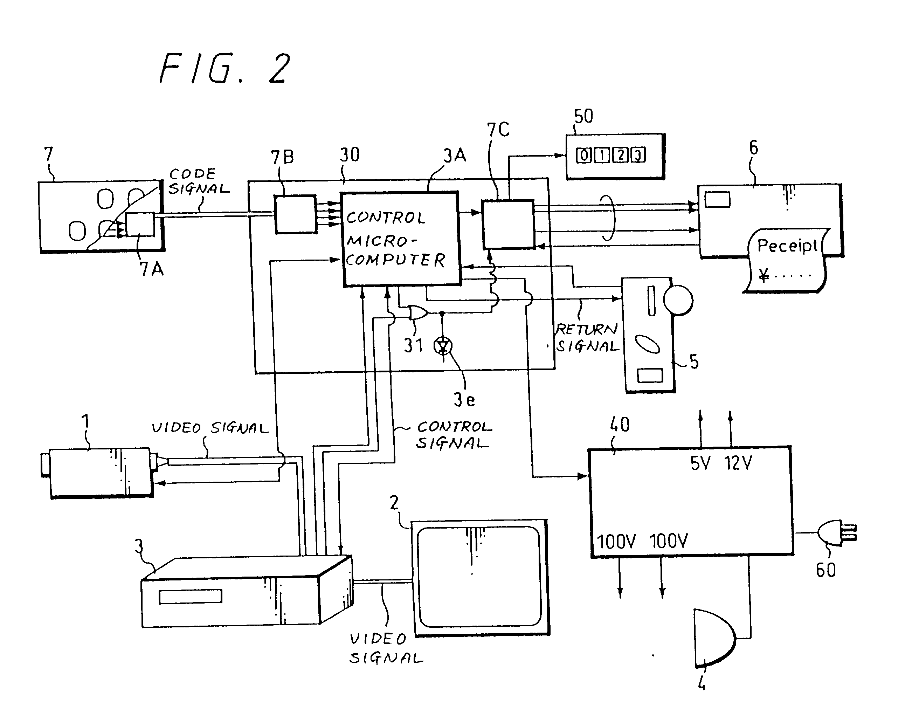

FIG. 2 shows in block form various components of the video photography system shown in FIG. 1.

In FIG. 2, a video signal generated by the video camera 1 as representing a video image captured by the video camera 1 is supplied to the video printer 3 and stored in an image memory (not shown) in the video printer 3. The video signal stored in the image memory in the video printer 3 is then supplied to the video monitor 2.

The video photography system has a main board 30 and a power supply board 40. The main board 30 supports thereon a control microcomputer 3A which sends control signals to the video camera 1 and the video printer 3.

Operation signals produced when the operation buttons on the remote commander 7 are pressed are converted by a microcomputer 7A in the remote commander 7 into code signals which are supplied through a microcomputer 3B on the main board 30 to the control microcomputer 3A.

Signals are also supplied from the control microcomputer 3A through a microcomputer 7C on the main board 30 to the printer 6. Signals representing operating conditions of the printer 6 are supplied from the printer 6 through the microcomputer 7C on the main board 30 to the control microcomputer 3A.

Information with respect to a coin or coins which are inserted into the coin counter 5 through the coin insertion slot 5i is supplied to the control microcomputer 3A. A return signal indicative of a return of a coin or coins is supplied from the control microcomputer 3A to the coin counter 5.

A signal from the control microcomputer 3A is also supplied through the microcomputer 7C on the main board 30 to an event counter 50 for counting the number of times that the video photography system is activated.

The power supply board 40 is supplied with 100-volt electric energy from a commercial power supply through a power plug 60. The 100-volt electric energy is then supplied from the power supply board 40 to the video monitor 2, the video printer 3, and the illumination lamp 4. 5- and 12-volt electric energy is also supplied from the power supply board 40 to the main board 30 and the printer 6. The power supply board 40 is controlled by a control signal supplied from the control microcomputer 3A.

Signals from the video printer 3 and the control microcomputer 3A are supplied through an OR gate 31 to the LED 3e and also to the microcomputer 3C.

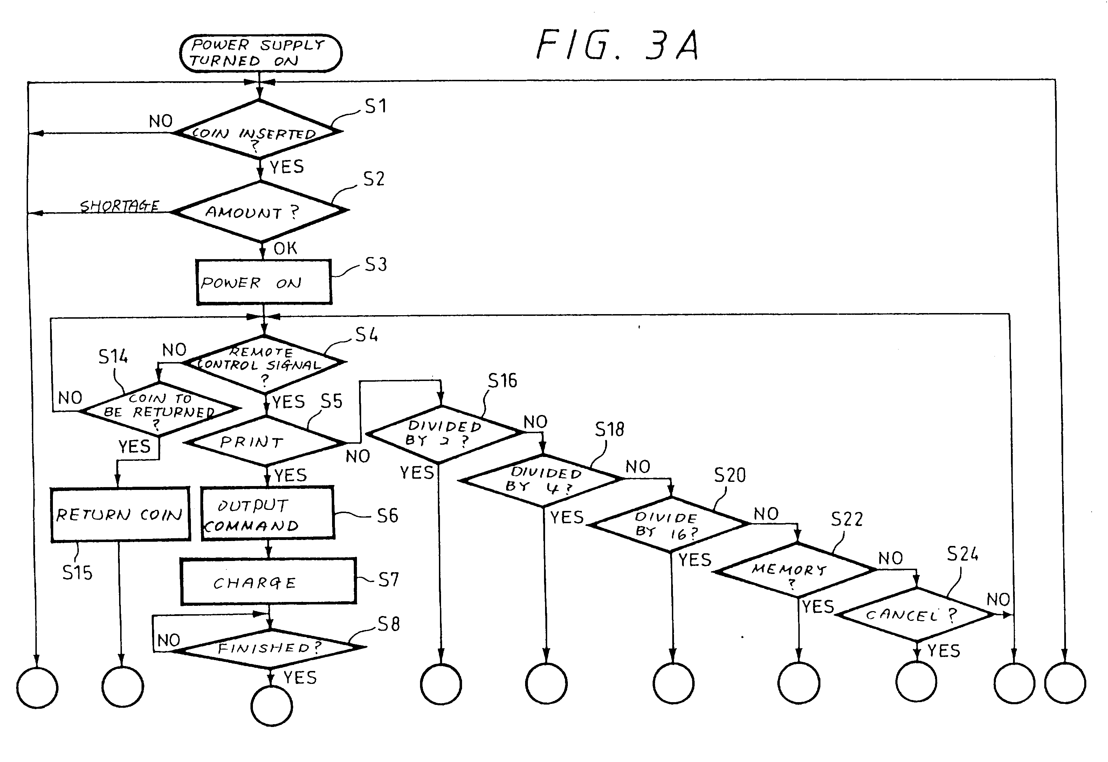

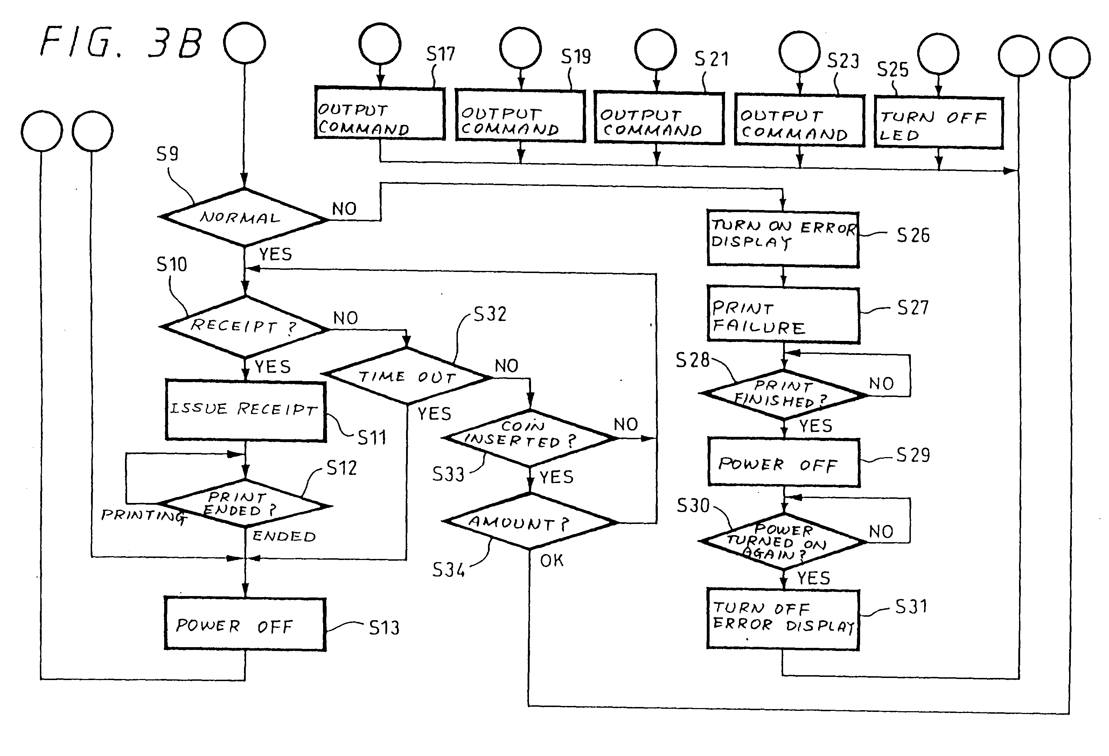

FIGS. 3A and 3B illustrate an operation sequence of the video photography system shown in FIG. 1, which is controlled by the control microcomputer 3A.

When the power supply is turned on, the control microcomputer 3A decides whether a coin or coins are inserted into the coin counter 5 through the coin insertion slot 5i or not in a step S1. If a coin or coins are not inserted into the coin counter 5 in the step S1, then the step S1 is repeated. If a coin or coins are inserted into the coin counter 5 in the step S1, then the control microcomputer 3A determines the amount of money represented by the inserted coin or coins in a step S2. If the amount of money is not sufficient in the step S2, control goes back to the step S1. If the amount of money is sufficient in the step S2, then the control microcomputer 3A effects a power-on process in a step S3 by controlling the power supply board 40 to turn on the video camera 1, the video monitor 2, the video printer 3, the illumination lamp 4, and the remote commander 7.

In a next step S4, the control microcomputer 3A decides whether there is a remote control signal from the remote commander 7 or not. If there is a remote control signal from the remote commander 7, then the control microcomputer 3A decides in a step S5 whether or not the remote control signal represents a print signal produced when the print button 7p is pressed. If remote control signal represents a print signal, then the control microcomputer 3A outputs a print command for printing an image represented by the video signal stored in the image memory, to the video printer 3 in a step S6.

In a next step S7, the control microcomputer 3A carries out a charging process by gathering the coin or coins inserted into the coin counter 5. Before the control microcomputer 3A carries out the charging process, the coin or coins inserted into the coin counter 5 are pooled in the coin counter 5. Thereafter, the control microcomputer 3A decides whether a signal indicative of an end of the printing operation is returned from the video printer 3 or not in a step S8. The control microcomputer 3A repeats the step S8 until a signal indicative of an end of the printing operation is returned from the video printer 3.

If a signal indicative of an end of the printing operation is returned from the video printer 3, the control microcomputer 3A decides whether the printing operation of the video printer 3 is normally finished or not in a step S9. If the printing operation of the video printer 3 is normally finished, then the control microcomputer 3A decides whether the print request button 6p of the printer 6 is pressed or not in a step S10. If the print request button 6p is pressed, then the control microcomputer 3A effects a process of issuing a printed receipt 9 in a step S11. Specifically, the control microcomputer 3A supplies data for a printed receipt 9 depending on the coin or coins gathered in the step S7, to the printer 6, which then prints the data on a receipt 9.

Then, the control microcomputer 3A decides whether a signal indicative of an end of the printing operation is returned from the printer 6 or not in a step S12. The control microcomputer 3A repeats the step S12 until a signal indicative of an end of the printing operation is returned from the printer 6. If a signal indicative of an end of the printing operation is returned from the printer 6, then the control microcomputer 3A effects a power-off process in a step S13 by controlling the power supply board 40 to turn off the video camera 1, the video monitor 2, the video printer 3, the illumination lamp 4, and the remote commander 7. After the step S13, control returns to the step S1.

If there is no remote control signal in the step S4, the control microcomputer 3A decides whether the coin return button 5c of the coin counter 5 is pressed or not in a step S14. If the coin return button 5c is pressed, then the control microcomputer 3A carries out a coin return process in a step S15. In the coin return process, the pooled coin or coins are returned through the coin return slot 5b. If the coin return button 5c is not pressed in the step S14, then control goes back to the step S4, and the control microcomputer 3A repeats the step S4.

If the remote control signal does not represent a print signal in the step S5, then the control microcomputer 3A decides whether or not the remote control signal represents a divide-by-2 signal produced when the division button 7d₁ is pressed for dividing the image by 2, in a step S16. If the remote control signal represents a divide-by-2 signal, then the control microcomputer 3A outputs to the video printer 3 a command for reducing the size of the image stored in the image memory to a 1/2 size and presenting two such reduced images in a step S17. Thereafter, control returns to the step S4.

If the remote control signal does not represent a divide-by-2 signal in the step S16, then the control microcomputer 3A decides whether or not the remote control signal represents a divide-by-4 signal produced when the division button 7d₂ is pressed for dividing the image by 4, in a step S18. If the remote control signal represents a divide-by-4 signal, then the control microcomputer 3A outputs to the video printer 3 a command for reducing the size of the image stored in the image memory to a 1/4 size and presenting four such reduced images in a step S19. Thereafter, control returns to the step S4.

If the remote control signal does not represent a divide-by-4 signal in the step S18, then the control microcomputer 3A decides whether or not the remote control signal represents a divide-by-16 signal produced when the division button 7d₃ is pressed for dividing the image by 16, in a step S20. If the remote control signal represents a divide-by-16 signal, then the control microcomputer 3A outputs to the video printer 3 a command for reducing the size of the image stored in the image memory to a 1/16 size and presenting sixteen such reduced images in a step S21. Thereafter, control returns to the step S4.

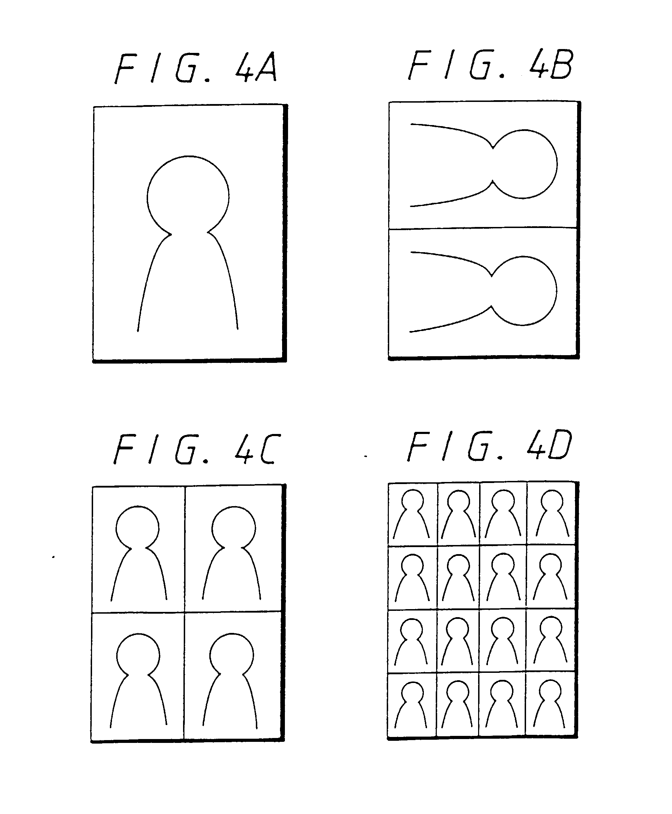

In the above steps S16 - S21, the size of an image as shown in FIG. 4A, for example, is reduced to 1/2, 1/4, 1/16 sizes, and two, four, and sixteen of those reduced images are generated as shown in FIGS. 4B, 4C, 4D, respectively. Control then returns to the step S4, and those reduced images are printed if the remote control signal represents a print signal in the step S5.

If the remote control signal does not represent a divide-by-16 signal in the step S20, then the control microcomputer 3A decides whether or not the remote control signal represents a memory signal produced when the memory button 7m is pressed in a step S22. If the remote control signal represents a memory signal, then the control microcomputer 3A outputs to the video printer 3 a command for storing the video signal generated by the video camera 1 into the image memory, and energizes the LED 3e, in a step S23. Thereafter, control returns to the step S4.

If the remote control signal does not represent a memory signal in the step S22, then the control microcomputer 3A decides whether the remote control signal represents a cancel signal produced when the cancel button 7c is pressed in a step S24. If the remote control signal represents a cancel signal, then the control microcomputer 3A de-energizes the LED 3e in a step S25. Thereafter, control returns to the step S4.

If the printing operation of the video printer 3 is not normally finished in the step S9, then the control microcomputer 3A energizes the LED 3e in a step S26. Thereafter, the control microcomputer 3A carries out a print failure process in a step S27. Specifically, the control microcomputer 3A supplies print failure data indicating that the printing operation of the video printer 3 is not normally finished in the step S9, to the receipt printer 6, which prints a print failure message.

Then, the control microcomputer 3A decides whether a signal indicative of an end of the printing operation is returned from the printer 6 or not in a step S28. The control microcomputer 3A repeats the step S28 until a signal indicative of an end of the printing operation is returned from the printer 6. If a signal indicative of an end of the printing operation is returned from the printer 6, then the control microcomputer 3A effects a power-off process in a step S29.

The control microcomputer 3A decides whether the power supply is turned on again or not in a step S30. The control microcomputer 3A repeats the step S30 until the print failure is removed and the power supply is turned on again. If the power supply is turned on again, the control microcomputer 3A de-energizes the LED 3e in a step S31. Thereafter, control returns to the step S1.

If the print request button 6p is not pressed in the step S10, then the control microcomputer 3A decides whether a predetermined time has elapsed (timeout) or not in a step S32. If the predetermined time has elapsed, then control jumps to the step S13. If the predetermined time has not elapsed, then the control microcomputer 3A decides whether a coin or coins are inserted into the coin counter 5 through the coin insertion slot 5i or not in a step S33.

If a coin or coins are not inserted into the coin counter 5 in the step S33, then control returns to the step S10. If a coin or coins are inserted into the coin counter 5 in the step S33, then the control microcomputer 3A determines the amount of money represented by the inserted coin or coins in a step S34. If the amount of money is not sufficient in the step S34, control goes back to the step S10. If the amount of money is sufficient in the step S34, then control returns to the step S4.

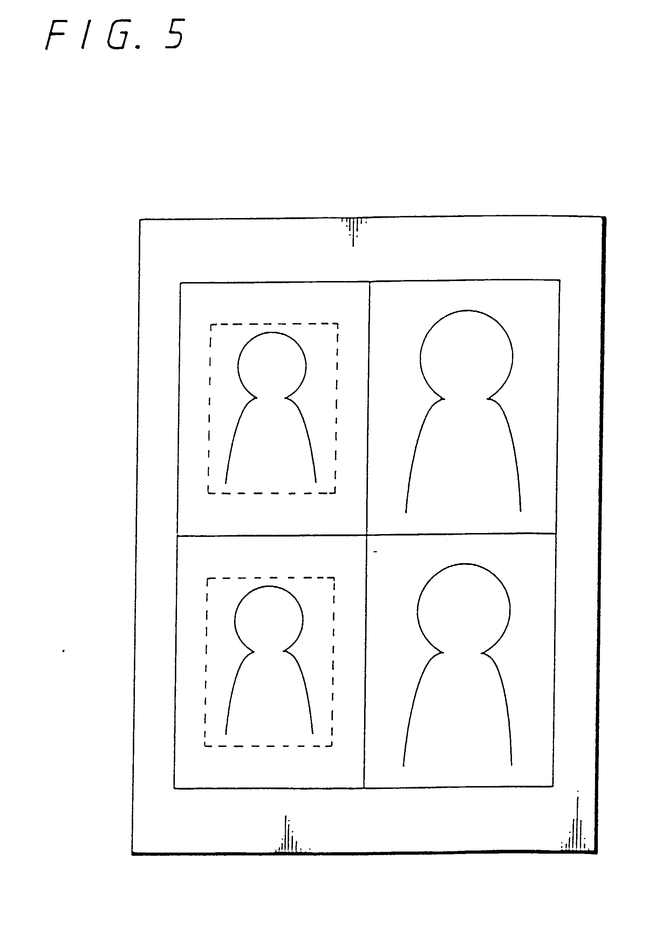

If the remote control signal represents a zoom signal produced when the zoom buttons 7z₁, 7z₂ of the remote commander 7 are pressed, then the control microcomputer 3A carries out steps similar to the steps S16 - S21 to zoom all or some of images to be printed, e.g., to enlarge two images and reduce two images as shown in FIG. 5.

While the image is being divided by N (N = 2, 4, 16) as described above, the steps S16 - S21 may be carried out again to replace N/M (M = 1, 2, 4, 8) of the divided images with other images.

The video photography system according to the first embodiment allows the user to confirm an image captured by the video camera 1 on the video monitor 2 and thereafter print the image on the photoprint 8 with the video printer 3, so that the user can obtain a desired photoprint. The video photography system can easily produce a plurality of photoprints of the same image by repeatedly printing the image stored in the image memory. The video photography system can also issue a receipt for the amount of money paid for a produced photoprint or photoprints.

The video camera 1 and the video monitor 2 usually have an aspect ratio of 4/3 (width: 4/height: 3). Since the video camera 1 and the video monitor 2 are placed on their sides, their actual aspect ratio is 3/4. Therefore, the video photography system can produce portrait photoprints which are typically used on certificates such as driver's licenses or passports. The video photography system can also easily enlarge, reduce, and divide images captured by the video camera 1, so that it can produce portrait photoprints of desired sizes.

The video photography system can be used as a coin-activated video photography system which is typically useful to produce portrait photoprints which are typically used on certificates such as driver's licenses or passports. Since the video photography system can issue receipts, it can find applications where produced photoprints are used for business purposes and hence the amounts of money paid for them are reimbursable as expenses.

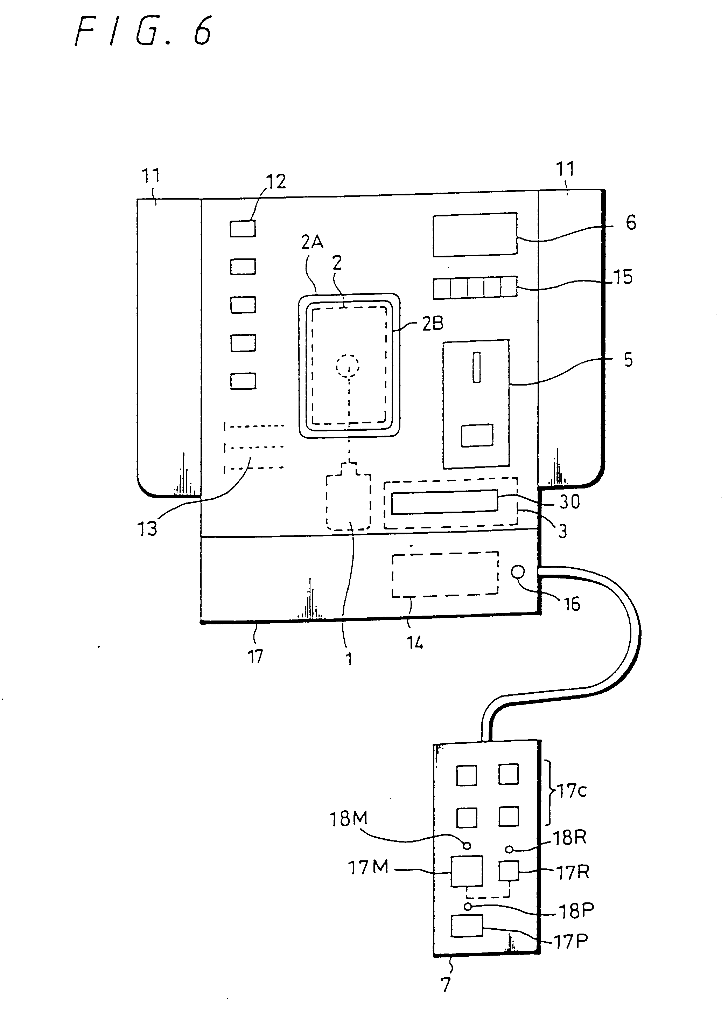

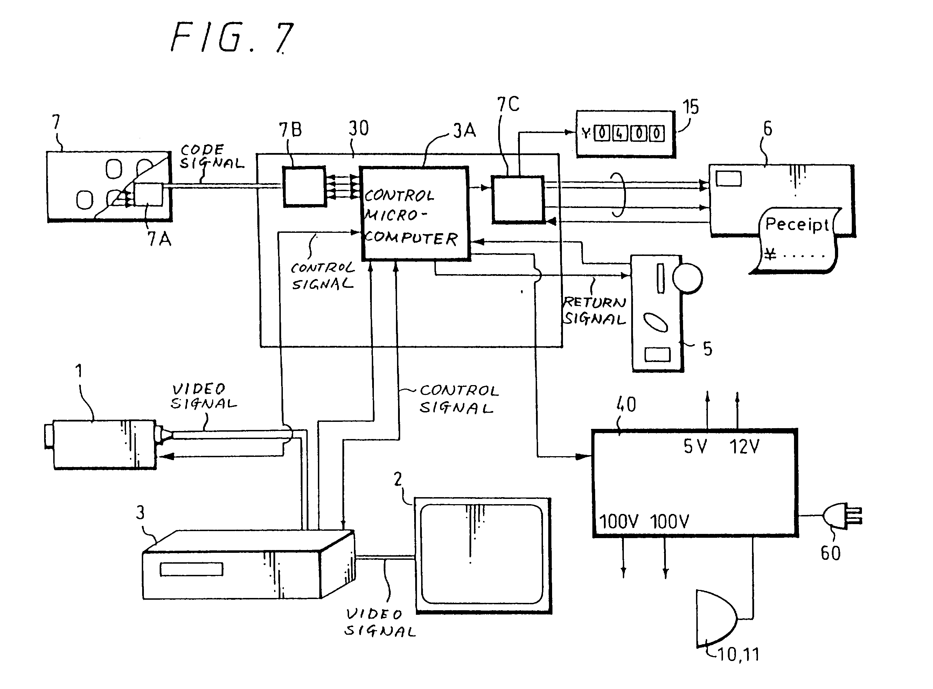

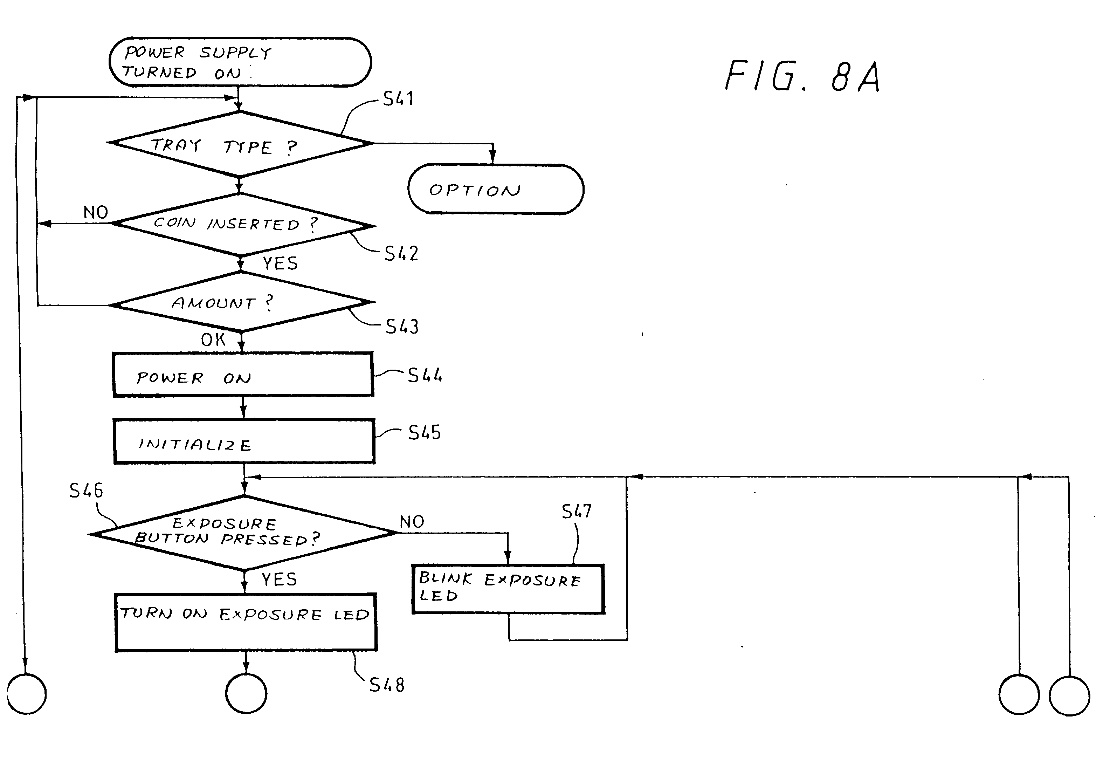

FIGS. 6, 7, and 8A through 8C show a video photography system according to a second embodiment of the present invention.

As shown in FIG. 6, the video photography system according to the second embodiment of the present invention has a system housing having a window 2A defined in its front panel and housing a video monitor 2 with its screen disposed in the window 2A. The system housing also houses a video camera 1 whose lens can be seen at the center of the screen of the video monitor 2 by a half-silvered mirror 2B that is positioned in the window 2A in front of the screen of the video monitor 2. The video monitor 2 and the video camera 1 are placed on their sides for capturing and displaying, respectively, portrait images which are typically used on certificates such as driver's licenses or passports.

The system housing also houses a video printer 3 disposed behind an outlet slot 3o which is defined in the front panel of the system housing for ejecting a produced photoprint from the video printer 3. A sheet feeder tray 14 for supplying sheets of print paper to the video printer 3 is disposed in the system housing below the video printer 3 behind a cover 17 having a lock 16. A pair of illumination lamps 11 is mounted on opposite lateral sides of the system housing for emitting illuminating light forwardly of the system housing.

A plurality of selector buttons 12 are mounted on the front panel of the system housing on the left-hand side of the window 2A for selecting desired colors for the background of a subject to be imaged and photographed. A description 13 as to how to use the video photography system is carried on the front panel of the system housing below the selector buttons 12. A coin counter 5 is housed in the system housing and has its front face appearing on the front panel of the system on the right-hand side of the window 2A. The system housing also accommodates an amount display unit 15 positioned above the coin counter 5 for displaying the amount of money represented by a coin or coins inserted into the coin counter 5, and a printer 6, typically a thermal transfer printer, positioned above the amount display unit 15 for printing and issuing a receipt for an inserted coin or coins.

A remote commander 7 is connected to the video printer 3 by a cable for controlling the video camera 1 and the video printer 3. The remote commander 7 has a plurality of operation buttons 17C including tilt buttons for tilting the video camera 1 upwardly and downwardly and zoom buttons for enlarging and reducing captured images. The remote commander 7 has an exposure (memory) button 17M, a re-exposure button 17R, and a print button 17P, and also has exposure, re-exposure, and print LEDs 18M, 18R, 18P disposed respectively near the exposure button 17M, the re-exposure button 17R, and the print button 17P for indicating operating statuses of these buttons.

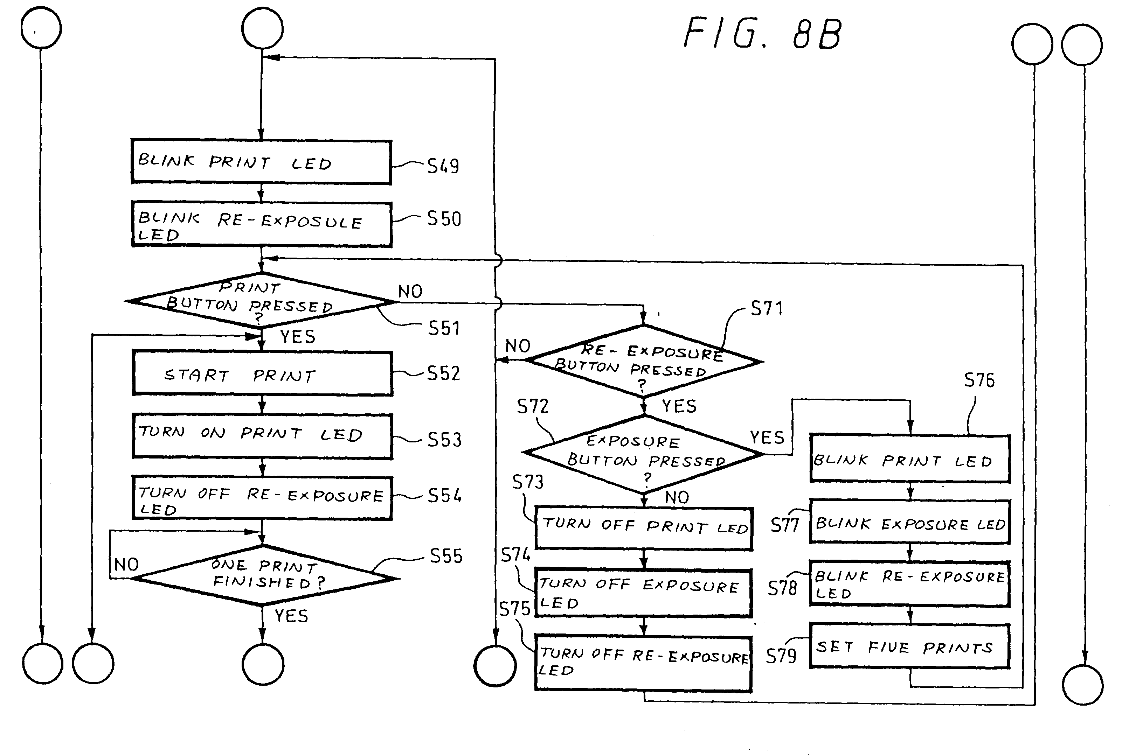

FIG. 7 shows in block form various components of the video photography system shown in FIG. 6.

In FIG. 7, a video signal generated by the video camera 1 as representing a video image captured by the video camera 1 is supplied to the video printer 3 and stored in an image memory (not shown) in the video printer 3. The video signal stored in the image memory in the video printer 3 is then supplied to the video monitor 2.

The video photography system has a main board 30 and a power supply board 40. The main board 30 supports thereon a control microcomputer 3A which sends control signals to the video camera 1 and the video printer 3.

Operation signals produced when the buttons 17C, 17M, 17R, 17P on the remote commander 7 are pressed are converted by a microcomputer 7A in the remote commander 7 into code signals which are supplied through a microcomputer 3B on the main board 30 to the control microcomputer 3A. Signals are supplied from the control microcomputer 3A through the microcomputer 3B to the LEDs 18M, 18R, 18P on the remote commander 7.

Signals are also supplied from the control microcomputer 3A through a microcomputer 7C on the main board 30 to the printer 6. Signals representing operating conditions of the printer 6 are supplied from the printer 6 through the microcomputer 7C on the main board 30 to the control microcomputer 3A.

Information with respect to a coin or coins which are inserted into the coin counter 5 through the coin insertion slot 5i is supplied to the control microcomputer 3A. A return signal indicative of a return of a coin or coins is supplied from the control microcomputer 3A to the coin counter 5.

Signals from the control microcomputer 3A are supplied through the microcomputer 7C to the amount display unit 15 for displaying the amount of money represented by a coin or coins inserted into the coin counter 5 and an amount of money which remains to be paid after the video photography system has started to operate.

The power supply board 40 is supplied with 100-volt electric energy from a commercial power supply through a power plug 60. The 100-volt electric energy is then supplied from the power supply board 40 to the video monitor 2, the video printer 3, and the illumination lamps 11. 5- and 12-volt electric energy is also supplied from the power supply board 40 to the main board 30 and the printer 6. The power supply board 40 is controlled by a control signal supplied from the control microcomputer 3A.

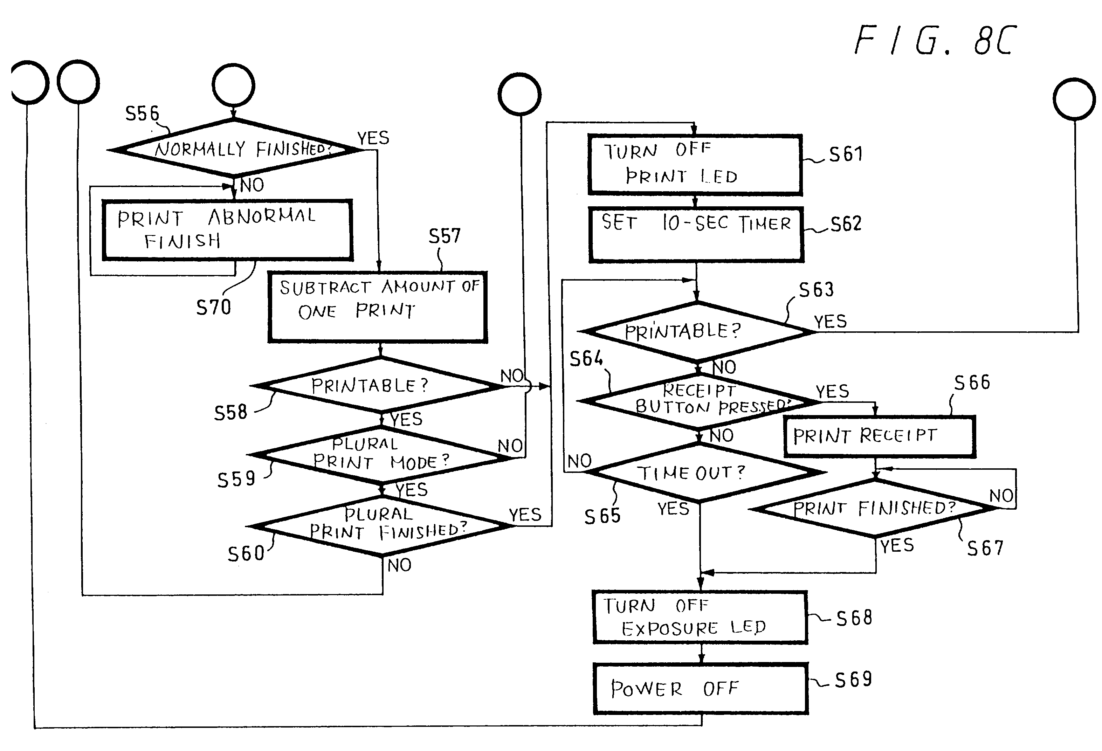

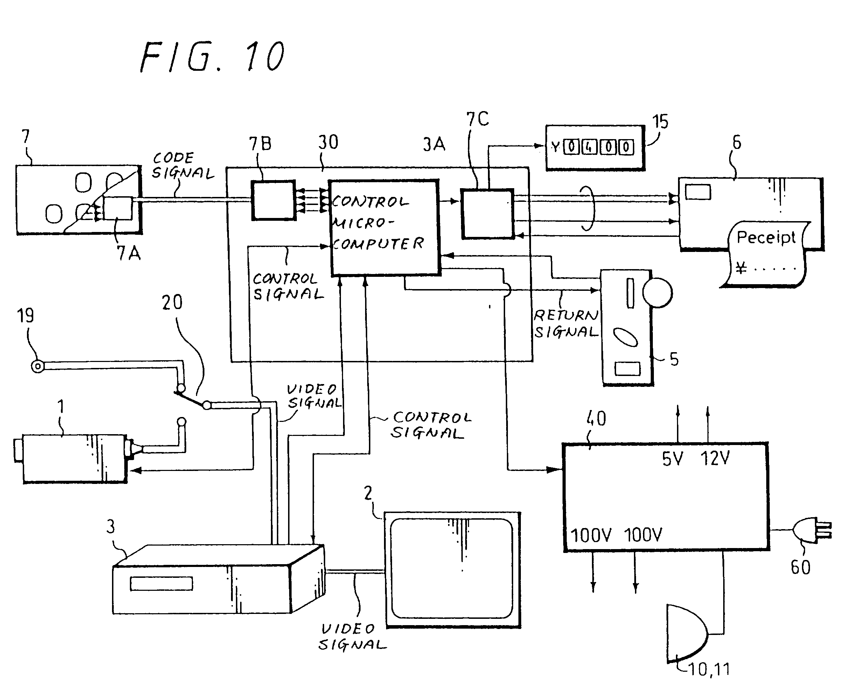

FIGS. 8A, 8B, and 8C illustrate an operation sequence of the video photography system shown in FIG. 6, which is controlled by the control microcomputer 3A.

When the power supply is turned on, the control microcomputer 3A decides the type of the sheet feeder tray 14 in a step S41. When the video photography system is used on the street for a plurality of users to produce photoprints, the video photography system typically produces photoprints for certificate use or photoprints as small as mail stamps. The type of photoprints produced by the video photography system is limited depending on where the video photography system is installed. The sheet feeder tray 14 carries 2-bit identification information, and the size of images (divided images) is determined depending on the sheet feeder tray 14 which is loaded into the video photography system.

Specifically, if the video photography system is installed in an area where photoprints for certificate use are expected, the sheet feeder tray 14 supplies a sheet of print paper having a B6 size which is divided into four segments and images are printed on the respective segments as shown in FIG. 4C. If the video photography system is installed in an area where photoprints as small as mail stamps are expected, the sheet feeder tray 14 supplies a sheet of print paper having a B6 size which is divided into sixteen segments and images are printed on the respective segments as shown in FIG. 4D. In the operation sequence shown in FIGS. 8A through 8C, it is assumed that the sheet feeder tray 14 supplies a sheet of print paper having a B6 size which is divided into sixteen segments and images are printed on the respective segments as shown in FIG. 4D. If another sheet feeder tray is identified, control goes to an optional sequence.

In a step S42, the control microcomputer 3A decides whether a coin or coins are inserted into the coin counter 5 or not. If a coin or coins are not inserted into the coin counter 5 in the step S42, then the steps S41, 42 are repeated. If a coin or coins are inserted into the coin counter 5 in the step S42, then the control microcomputer 3A determines the amount of money represented by the inserted coin or coins in a step S43. If the amount of money is not sufficient in the step S43, control goes back to the step S41, and the steps S41 - S43 are repeated.

If the amount of money is sufficient in the step S43, then the control microcomputer 3A effects a power-on process in a step S44 by controlling the power supply board 40 to turn on the video camera 1, the video monitor 2, the video printer 3, the illumination lamps 11, and the remote commander 7. The control microcomputer 3A initializes the main board 30, etc. in a step S45.

The control microcomputer 3A decides whether there is a signal produced when the exposure button 17M on the remote commander 7 is pressed or not in a step S46. If there is no such signal, then the control microcomputer 3A blinks the exposure LED 18M in a step S47. If there is a signal from the exposure button 17M, then the control microcomputer 3A turns on the exposure LED 18M in a step S48, and issues a command to store a supplied video signal to the video printer 3.

The control microcomputer 3A blinks the print LED 18P in a step S49, and then blinks the re-exposure LED 18R in a step S50. The control microcomputer 3A decides whether there is a signal produced when the print button 17P is pressed or not in a step S51. If there is a signal from the print button 17P, then the control microcomputer 3A issues a command to print the image represented by the stored video signal to the video printer 3 in a step S52.

The control microcomputer 3A turns on the print LED 19P in a step S53, and turns off the re-exposure LED 18R in a step S54. The control microcomputer 3A decides whether the printing of one photoprint is finished or not in a step S55. If not finished, then the step S55 is repeated. If finished, then the control microcomputer 3A decides whether the printing operation is normally finished or not in a step S56.

If the printing operation is normally finished, then the control microcomputer 3A subtracts the amount of money for one photoprint from the amount of money represented by the inserted coin or coins in a step S57, and then decides whether a further photoprint or photoprints can be produced with the remaining amount of money in a step S58. If a further photoprint or photoprints can be produced, then the control microcomputer 3A decides whether a plural print mode (described later) is established or not in a step S59. If a plural print mode is not established, then control returns to the step S49.

If a plural print mode is established, then the control microcomputer 3A decides whether the printing of a plurality of photoprints is finished or not in a step S60. If the printing of a plurality of photoprints is not finished, then control goes back to the step S52. If a further photoprint or photoprints cannot be produced in the step S58 or if the printing of a plurality of photoprints is finished in the step S60, then the control microcomputer 3A turns off the print LED 18P in a step S61, and then sets a 10-second timer, for example, in a step S62.

Upon elapse of 10 seconds, the control microcomputer 3A decides whether a further photoprint or photoprints can be produced with the remaining amount of money in a step S63. If a further photoprint or photoprints can be produced, then control returns to the step S46. If a further photoprint or photoprints cannot be produced, then the control microcomputer 3A decides whether a receipt button (not shown) is pressed or not in a step S64. If the receipt button is not pressed, then the control microcomputer 3A decides whether a given period of time has elapsed (timeout) or not in a step S65. If the given period of time has not elapsed, then control goes back to the step S63.

If the receipt button is pressed in the step S64, then the control microcomputer 3A controls the printer 6 to issue a receipt in a step S66. Specifically, the control microcomputer 3A supplies data of the amount of money subtracted from the amount of money represented by the inserted coin or coins to the printer 6, which prints a receipt indicating the supplied data of the amount of money. The print button 17P may double as the receipt button.

The control microcomputer 3A then decides whether a signal indicative of an end of the printing of the receipt is returned from the printer 6 or not in a step S67. The control microcomputer 3A repeats the step S67 until a signal indicative of an end of the printing of the receipt is returned from the printer 6. If a signal indicative of an end of the printing of the receipt is returned from the printer 6 or if the given period of time has elapsed in the step S65, then the control microcomputer 3A turns off the exposure LED 18M in a step S68, and effects a power-off process in a step S69 by controlling the power supply board 40 to turn off the video camera 1, the video monitor 2, the video printer 3, the illumination lamps 11, and the remote commander 7. After the step S69, control returns to the step S41.

If the printing operation is not normally finished in the step S56, then the control microcomputer 3A outputs a command for printing an abnormal finish to the printer 6 in a step S70.

If there is no signal from the print button 17P in the step S51, then the control microcomputer 3A decides whether there is a signal produced when the re-exposure button 17R on the remote commander 7 is pressed or not in a step S71. If there is no such signal, then control returns to the step S49. If there is a signal from the re-exposure button 17R, then the control microcomputer 3A decides whether there is a signal produced when the exposure button 17M is pressed or not in a step S72.

If there is no signal from the exposure button 17M, the control microcomputer 3A determines that the video photography system is in a re-exposure mode. In the re-exposure mode, the control microcomputer 3A turns off the print LED 18P in a step S73, turns off the exposure LED 18M in a step S74, and turns off the re-exposure LED 18R, after which control goes back to the step S46.

If there is a signal from the exposure button 17M, the control microcomputer 3A determines that the video photography system is in the plural print mode described above. In the plural print mode, the control microcomputer 3A blinks the print LED 18P in a step S76, blinks the exposure LED 18M in a step S77, and blinks the re-exposure LED 18R in a step S78. Thereafter, the control microcomputer 3A sets the number of photoprints to be produced to "5", for example, in a step S79, after which control goes back to the step S51.

Therefore, if the exposure button 17M is pressed the step S46 to store the image in the image memory in the video printer 3, then when the print button 17P is not pressed in the step S51 and the re-exposure button 17R is pressed while the exposure button 17M is being pressed, the video photography system enters the plural print mode. The number of photoprints to be produced is set to "5", for example, in such button pressing operation, and the same button pressing operation may be repeated to set the number of photoprints to be produced to "10", "15", etc.

When the print button 17P is pressed in the step S51, the steps S52 - S60 are repeated until the set number of photoprints are produced. If the amount of money represented by the inserted coin or coins become insufficient in the printing process, the printing process is interrupted. If the re-exposure button 17R is pressed in the printing process, the printing process is also interrupted.

The video photography system according to the second embodiment allows the user to produce desired photoprints simply by operating the three buttons, i.e., the exposure button 17M, the print button 17P, and the re-exposure button 17R, and to easily set the number of photoprints to be produced simply by operating the exposure button 17M and the re-exposure button 17R.

The sheet feeder tray 14 carries sheet type identification information, and, based on the sheet type identification information, the size of images (divided images) to be produced is determined depending on the sheet feeder tray 14 that is loaded in the video photography system. Therefore, the size of images (divided images) to be produced is automatically determined by selecting a sheet feeder tray 14 depending on where the video photography system is installed. This prevents the user from carrying out extra operations for setting a photoprint size before producing photoprints, and also prevents photoprints for certificate use from being printed on sheets of print paper which are as small as mail stamps.

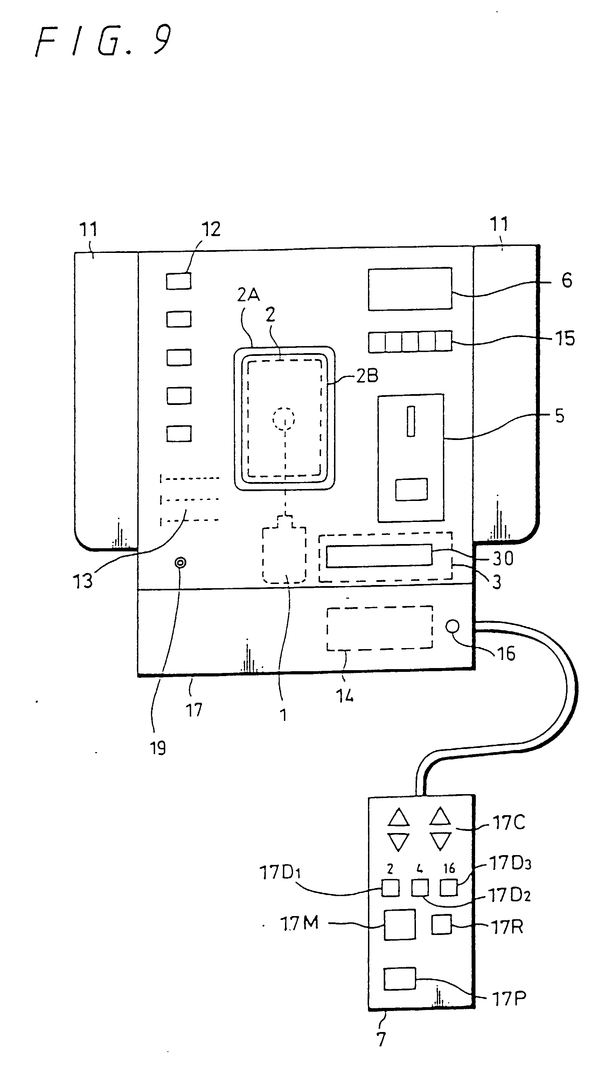

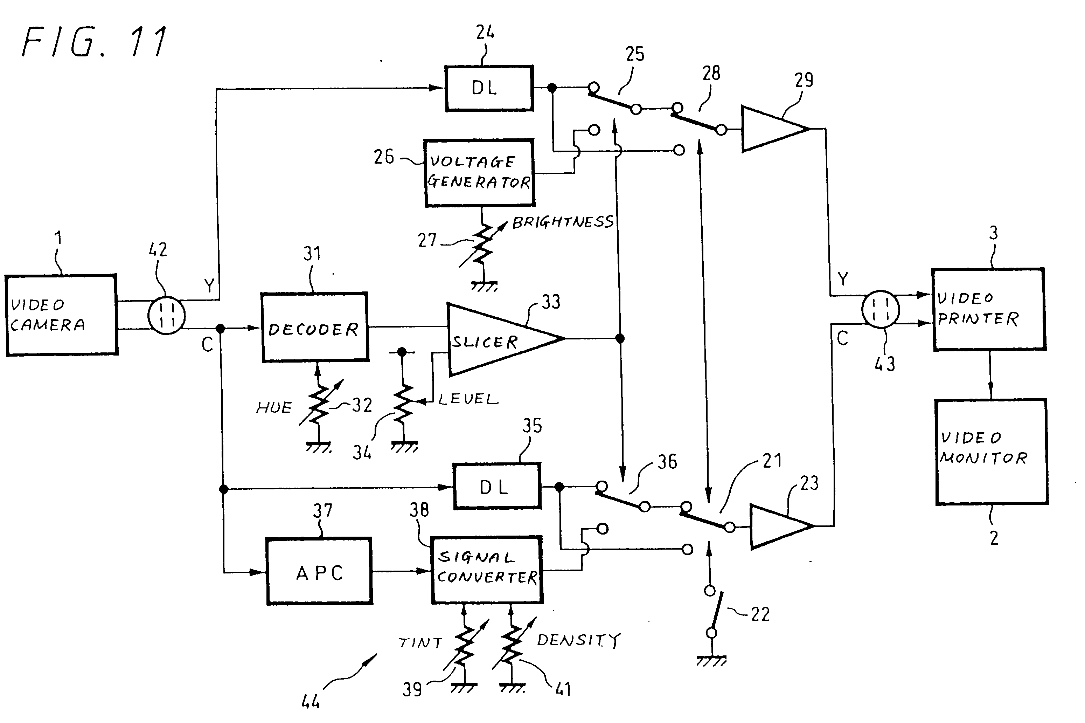

FIGS. 9 and 10 show a video photography system according to a third embodiment of the present invention. The video photography system shown in FIG. 9 differs from the video photography system shown in FIG. 6 except that the remote commander 7 shown in FIG. 9 has division buttons 17D₁, 17D₂, 17D₃ for dividing images by 2, 4, 16, respectively, instead of the LEDs 18M, 18R, 18P shown in FIG. 6. The division buttons 17D₁, 17D₂, 17D₃ are identical to the division buttons 7d₁, 7d₂, 7d₃ shown in FIG. 1. The video photography system shown in FIG. 9 further includes a video input terminal 19 mounted on the front panel of the system housing below the description 13. The video input terminal 19 serves to receive a video signal supplied from an external video signal source such as a video tape recorder or the like.

FIG. 10 shows in block form various components of the video photography system shown in FIG. 9. The video photography system shown in FIG. 10 is essentially the same as the video photography system shown in FIG. 7 except that a selector switch 20 for selecting either the video camera 1 or the video input terminal 19 is connected to the video printer 3. The selector switch 20 is automatically operable to connect the video input terminal 19 to the video printer 3 when a video signal is supplied to the video input terminal 19.

The video photography system according to the third embodiment operates in substantially the same manner as the video photography system according to the first embodiment except that the exposure button 17M and the recapture button 17R are checked in the respective steps S22, S24. Therefore, operation of the video photography system according to the third embodiment will not be described in detail below.

The video input terminal 19 allows the user to supply a video signal from an external video signal source to the video monitor 2 and the video printer 3 for viewing and printing video images. Therefore, the user can produce photoprints on the video photography system using video images of his own choice which may be captured by a portable video camera, for example. Accordingly, the user is highly likely to be willing to repeatedly use the video photography system, which will then be efficiently used.

FIGS. 11 through 14 show a video photography system according to a fourth embodiment of the present invention.

As shown in FIG. 11, the video photography system according to the fourth embodiment comprises a background color converter 44 which is supplied with a video signal (so-called "S signal) composed of a luminance signal Y and a chroma signal C which are separate from each other from a video camera 1 through an input connector 42.

In the background color converter 44, the chroma signal C from the input connector 42 is supplied to a decoder 31 which separates a B-Y axis signal component, for example. The axis of the separated signal component can be adjusted by a hue (HUE) rheostat 32. The separated signal component is supplied to a slicer 33 which extracts the signal when its level is higher than a predetermined level that is adjusted by a level rheostat 34.

The chroma signal C from the input connector 42 is also supplied to one fixed contact of a selector switch 36 through a delay circuit (DL) 35 which adjusts a group delay due to the decoder 31 and the slicer 33.

The chroma signal C from the input connector 42 is also supplied to an APC circuit 17 which produces a continuous-wave signal corresponding to a subcarrier signal in the chroma signal C. The continuous-wave signal is supplied to a signal converter 38 which coverts the phase and level of the continuous-wave signal. The phase of the continuous-wave signal can be adjusted as desired by a tint rheostat 39, and the level of the continuous-wave signal can be adjusted as desired by a density rheostat 41. An output signal from the signal converter 38 is supplied to the other fixed contact of the selector switch 36.

The selector switch 36 has a movable contact which is connected to the other contact thereof when an output signal is produced by the slicer 33, and to said one contact when no output signal is produced by the slicer 33.

A signal from the selector switch 36 and a delayed signal from the delay circuit 35 are supplied to respective fixed contacts of a selector switch 21, which is controlled by a control signal from a control switch 22 to select one of the supplied signals. An output signal from the selector switch 21 is supplied through an amplifier 23 as a chroma signal C to an output connector 43.

The luminance signal Y from the input connector 2 is supplied to one contact of a selector switch 25 through a delay circuit (DL) 24 which adjusts a group delay due to the decoder 31 and the slicer 33.

A voltage generator 26 generates a voltage signal of a predetermined level which is adjusted by a brightness rheostat 27. The voltage signal from the voltage generator 26 is supplied with the other fixed terminal of the selector switch 25.

The selector switch 25 has a movable contact which is connected to the other contact thereof when an output signal is produced by the slicer 33, and to said one contact when no output signal is produced by the slicer 33.

A signal from the selector switch 25 and a delayed signal from the delay circuit 26 are supplied to respective fixed contacts of a selector switch 28, which is controlled by the control signal from the control switch 22 to select one of the supplied signals. An output signal from the selector switch 28 is supplied through an amplifier 29 as a luminance signal Y to the output connector 43.

The luminance signal Y and the chroma signal C from the output connector 43 are supplied to a video printer 3 where a field of the supplied video signal is stored in a field memory, for example. The stored field is printed as a photoprint by the video printer 3.

The video printer 3 repeatedly outputs the video signal supplied from the output connector 43 or the video signal stored in the field memory. The video signal outputted from the video printer 3 is supplied to a video monitor 2 which displays the video signal produced by the video camera 1 or the field stored in the field memory in the video printer 3.

The video photography system shown in FIG. 11 is thus capable of extracting a background area of a video signal produced by the video camera 1, changing the color of the extracted background area, displaying an image with the color-changed background area on the video monitor 2, and produces a photoprint of the image with the color-changed background area on the video printer 3.

The video photography system shown in FIG. 11 which is capable of changing the color of the background area of the video signal is relatively simple in structure and hence inexpensive to manufacture. For example, while the conventional chroma keying device has cost several hundreds of thousand yen, the above color changing arrangement of the video photography system shown in FIG. 11 can be manufactured at a cost of several hundreds yen.

An example of operation of the video photography system shown in FIG. 11 will be described below.

For easy extraction of an background area behind a subject to be photographed, the image of the subject is captured by the video camera 1 against the background area which is blue in its entirety, for example. The decoder 31 extracts a chroma signal corresponding to the blue background area. When the level of the chroma signal exceeds a given level, the signal converter 38 produces a chroma signal which represents a desired color for the background area. In this manner, a video signal with a desired background color is generated.

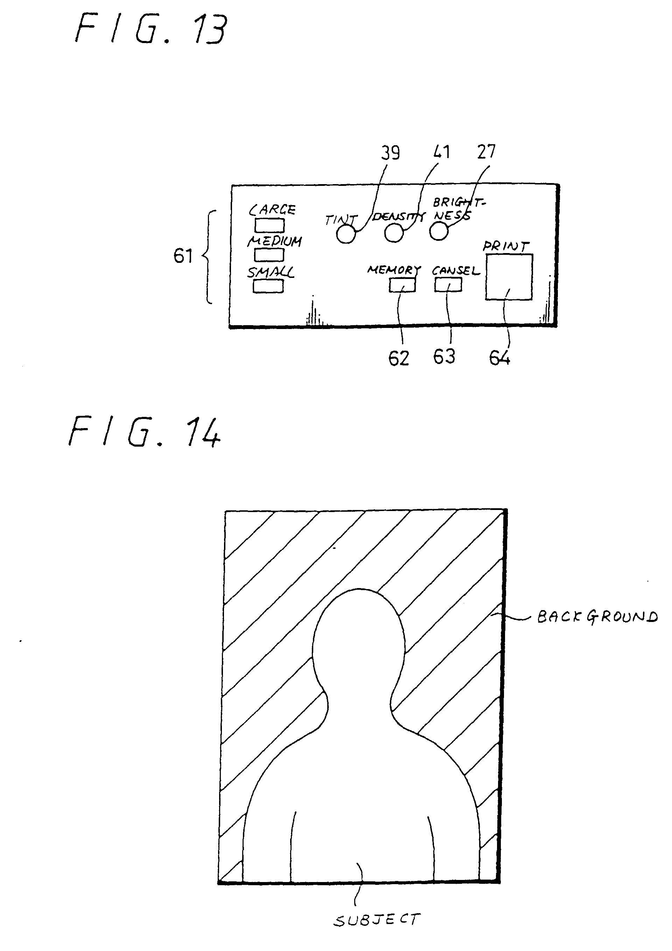

The tint of the background area is adjusted by the tint rheostat 39, the density thereof by the density rheostat 41, and the brightness thereof by the brightness rheostat 27. Accordingly, the video photography system can produce a photoprint in which the background area (shown hatched in FIG. 14) behind the subject is colored with a desired tint, density, and brightness.

The hue and level of the color of the extracted background area are adjusted by the hue rheostat 32 and the level rheostat 34. When the hue rheostat 32 and the level rheostat 34 are adjusted, it is possible to extract a color or density irregularity or a stain in the background area as a background portion. Therefore, such a color or density irregularity or a stain in the background area can be removed by coloring the background portion as desired.

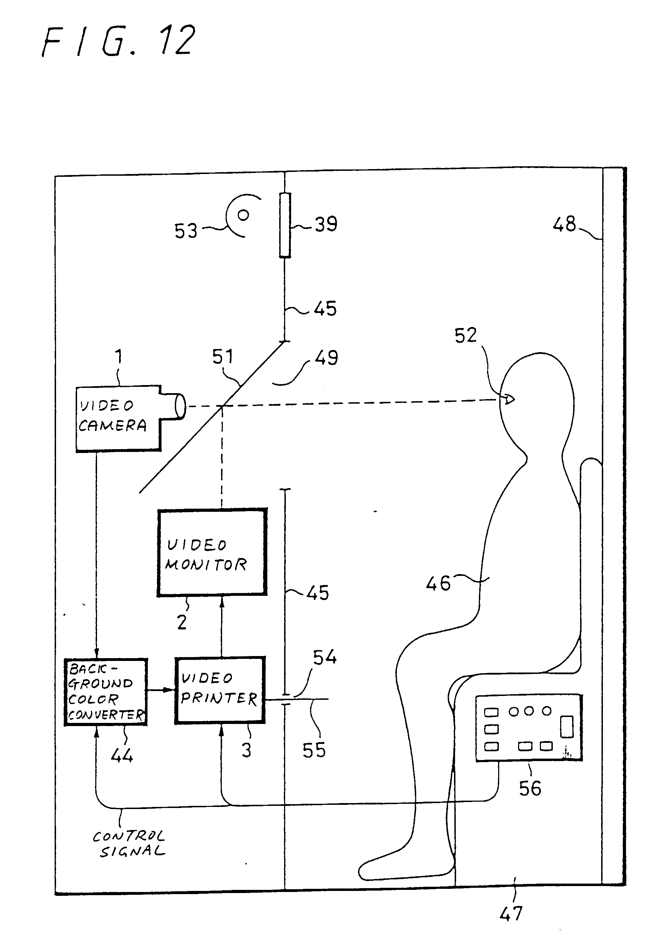

The video photography system shown in FIG. 11 may be incorporated in a coin-activated video photography system as shown in FIG. 12. In FIG. 12, the coin-activated video photography system is divided into two sections, i.e., right-hand and left-hand sections, by a vertical partition 45. In the right-hand section, a subject 46 such as a person is seated on a seat 47 held against a background wall 48 disposed therebehind.

The video camera 1, the background color converter 44, the video printer 3, and the video monitor 2 are disposed in the left-hand section. The vertical partition 45 has a hole 49 defined in a vertical position corresponding to the face of the subject 32 seated on the seat 47. The video camera 1 is positioned in confronting relation to the face of the subject 32 through the hole 49.

A beam splitter 51 inclined 45° to the vertical is positioned between the video camera 1 and the hole 49. The beam splitter 51 comprises a half-silvered mirror. The video monitor 2 is positioned below the beam splitter 51 for receiving light reflected by the beam splitter 51. Therefore, the subject 32 can see the video camera 1 and the video monitor 2 in the same direction, and can confirm an image displayed on the video monitor 2 without shifting the light of sight from his eye 52.

An illumination lamp 53 is disposed in an upper position in the left-hand section for emitting illuminating light toward the subject 32 through a light diffuser plate 39 mounted on an upper portion of the vertical partition 45. The vertical partition 45 has an outlet slot 54 defined in a lower portion thereof for discharging a photoprint 55 produced by the video printer 3 therethrough.

A control key console 56 is disposed in the vicinity of the seat 33 for outputting control signals for controlling the background color converter 44 and the video printer 3.

As shown in FIG. 13, the control key console 56 has the tint rheostat 39, the density rheostat 41, the brightness rheostat 27, and setting keys 61, i.e., large, medium, and small keys, for selecting the size of a photoprint to be produced. When the large key of the setting keys 61 is selected, a photoprint of an ordinary size is produced. When the medium key of the setting keys 61 is selected, a photoprint with an image reduced to a 1/2 size is produced. When the small key of the setting keys 61 is selected, a photoprint with an image reduced to a 1/4 size is produced.

The control key console 56 also has a memory key 62, a cancel key 63, and a print key 64. When the memory key 62 is pressed while a video signal generated by the video camera 1 is being displayed on the video monitor 2, the frame of the video signal at the time the memory key 62 is pressed is stored in an image memory, and displayed as a still image on the video monitor 2.

The user, typically the subject 46, confirmed the displayed image on the video monitor 2, and, if the displayed image is desirable, presses the print key 64 to enable the video printer 3 to produce a photoprint 55, which is discharged through the outlet slot 54. If the displayed image is not desirable, then the user presses the cancel key 63. Then, a video signal generated by the video camera 1 is displayed on the video monitor 2 and stored in the image memory, for the user to confirm a displayed image again.

The user of the video photography system can generate an image with its background colored as desired, confirms the image displayed on the video monitor 2, and produce a photoprint 41 of the image.

The coin-activated video photography system has a coin insertion slot (not shown) defined in the vertical partition 45, a coin counter (not shown) connected to the coin insertion slot, and a charge controller (not shown) for controlling operation of the video photography system depending on the amount of money represented by a coin or coins inserted into the coin counter. The coin-activated video photography system may also have a device for issuing receipts for a coin or coins inserted into the coin counter.

The rheostats 32, 34 are factory-adjusted to match the color of the background wall 48 shown in FIG. 12. The values to which the rheostats 32, 34 are factory-adjusted have certain margins for extracting a color or density irregularity or a stain in the background as a background portion.

In the above embodiments, the coin counter may be replaced with a device actuatable by a monetary medium such as a prepaid card or the like.

Having described preferred embodiments of the invention with reference to the accompanying drawings, it is to be understood that the invention is not limited to those precise embodiments and that various changes and modifications could be effected by one skilled in the art without departing from the spirit or scope of the invention as defined in the appended claims.

## Claims

1. A coin-activated video photography system comprising:
a video camera (1) for capturing an image;
a video monitor (2) for displaying the image captured by said video camera;
a video printer (3) for producing a photoprint representing the image captured by said video camera (1);
a coin counter (5) for receiving an inserted coin;
a printer (6) for printing a receipt for the coin received by said coin counter; and
a controller (7) for operating said video camera (1), said video monitor (2), and said video printer (3) to display an image and produce a photoprint of the image in response to insertion of a coin into said coin counter, and printing a receipt with said printer for the coin inserted into said coin counter.

2. A coin-activated video photography system according to claim 1,
wherein said video camera (1) and said video monitor (2) are placed on sides thereof for displaying a portrait image and producing a photoprint (8) of the portrait image.

3. A coin-activated video photography system according to claim 1 or 2,
wherein said controller (7) comprises means for modifying the size of an image represented by the video signal produced by said video camera, and supplying the video signal to said video printer to produce a photoprint representing the image of the modified size.

4. A coin-activated video photography system according to anyone of the preceding claims, wherein said controller (7) comprises means for reducing the size of an image represented by the video signal produced by said video camera (1), dividing a photoprint (8) produced by said video printer (3) into a plurality of areas, and controlling said video printer to print reduced images in the respective areas of said photoprint.

5. A coin-activated video photography system according to anyone of the preceding claims, wherein said controller (7) comprises means for applying a special effect to the video signal produced by said video camera (1), and controlling said video printer to produce a photoprint of an image represented by the video signal with the special effected applied thereto.

6. A coin-activated video photography system comprising:
a video camera (1) for capturing an image;
a video monitor (2) for displaying the image captured by said video camera;
a video printer (3) for producing a photoprint representing the image captured by said video camera; a coin counter (5) for receiving an inserted coin;
an illumination (4) device for emitting illuminating light; and
a controller (7) for operating said video camera;
said video monitor, and said video printer to display an image and produce a photoprint of the image in response to insertion of a coin into said coin counter and depression of an exposure button, printing a receipt with said printer for the coin inserted into said coin counter, and thereafter controlling said video printer to produce a plurality of photoprints in response to depression of a combination of said exposure button and another operation button.

7. A coin-activated video photography system according to claim 6,
wherein said controller (7) comprises means for permitting said video printer (3) to produce "n" photoprints when an amount of money represented by the coin inserted into said coin counter (5) is "n" times the amount of money which is required to produce a single photoprint (8).

8. A coin-activated video photography system according to claim 6 or 7, further comprising:
a sheet feeder tray for supplying sheets of print paper to said video printer; and
detecting means on said sheet feeder tray for producing a signal to select a size of a photoprint (8) which can be produced by said video printer.

9. A coin-activated video photography system comprising:
a video camera (1) for capturing an image;
a video monitor (2) for displaying the image captured by said video camera;
a video printer (3) for producing a photoprint representing the image captured by said video camera;
a coin counter (5) for receiving an inserted coin;
a controller (7) for operating said video camera,
said video monitor, and said video printer to display an image and produce a photoprint of the image in response to insertion of a coin into said coin counter; and a video input terminal for supplying a video signal, instead of a video signal from said video camera, to said video monitor and said video printer.

10. A coin-activated video photography system according to claim 9,
wherein said controller (7) comprises means for modifying the size of an image represented by the video signal supplied from said video input terminal, and supplying the video signal to said video printer to produce a photoprint (8) representing the image of the modified size.

11. A coin-activated video photography system according to claim 9 or 10,
wherein said controller (7) comprises means for reducing the size of an image represented by the video signal supplied from said video input terminal, dividing a photoprint (8) produced by said video printer into a plurality of areas, and controlling said video printer to print reduced images in the respective areas of said photoprint.

12. A coin-activated video photography system according to claim 9,
wherein said controller (7) comprises means for applying a special effect to the video signal supplied from said video input terminal, and controlling said video printer to produce a photoprint (8) of an image represented by the video signal with the special effected applied thereto.

13. A video photography system comprising:
a video camera (1) for capturing an image;
a video monitor (2) for displaying the image captured by said video camera;
a video printer (3) for producing a photoprint representing a filed of image represented by a video signal produced by said video camera;
extracting means for extracting a background area of the video signal; and
color-changing means for changing a color of the extracted background area.

14. A video photography system according to claim 13, wherein said extracting means comprises means for detecting, with a predetermined level, a signal of a predetermined axis in a chroma signal of said video signal.

15. A video photography system according to claim 13 or 14, wherein said color-changing means comprises means for extracting a subcarrier signal in a chroma signal of said video signal and shifting the phase of said subcarrier signal.

16. A video photography system according to anyone of claims 13 to 15,
wherein said video printer (3) produces a photoprint after an image represented by the video signal with the color of the background area thereof being changed is confirmed with said video monitor (2).
